# EUROPEAN PATENT APPLICATION

(11) **EP 1 630 458 A2**
(43) Date of publication of application: **01.03.2006**
(21) Application number: 05255249.4
(22) Date of filing: 25.08.2005
(51) Int. Cl.: F16H 61/00

(54) **Oil pump supporting structure of automatic transmission**

(30) Priority: 31.08.2004 JP 2004251447
(71) Applicant: JATCO Ltd, Fuji-shi, Shizuoka 417-8585 (JP)
(72) Inventor: Nishiyama, Hiroyuki, Jatco Ltd., Shizuoka 417-8585 (JP); Amano, Katsutoshi, Jatco Ltd., Shizuoka 417-8585 (JP)
(74) Representative: Burke, Steven David

(57) **Abstract**

There is provided an oil pump supporting structure which can prevent vibration and noise of an oil pump (2). A pump holding member (40) is disposed in substantially parallel with the tensioning direction of a chain (8), for connecting a partition member (27) and the oil pump to each other. As a result, vibration occurring in the tensioning direction of the chain when the oil pump is driven can be suppressed to reduce vibration noise.

## Description

### BACKGROUND OF THE INVENTION

### FIELD OF THE INVENTION

The present invention relates to a supporting structure of an oil pump that is disposed apart from an input shaft of an automatic transmission.

### DISCRIPTION OF THE PRIOR ART

Conventionally, as an oil pump for an automatic transmission, there has been known an oil pump that is disposed apart from an input shaft and driven by rotation of the input shaft via a chain that connects a drive sprocket connected to a pump impeller of the torque converter and a driven sprocket provided in the oil pump.

In a supporting structure of such an oil pump, an end face of the oil pump on a side opposite to the side on which the driven sprocket is provided is connected to a transmission case, and the side of the oil pump on which the driven sprocket is provided is fixed by inserting a pump shaft into a hole of a pump holder connected to the transmission case.

Such an oil pump supporting structure is disclosed in, for example, Japanese Laid-Open Patent Publication (Kokai) No. 2003-156127.

In the above oil pump supporting structure, however, the oil pump is positioned and fixed by inserting the shaft of the oil pump into the hole of the pump holder, but the process for mounting the oil pump is complicated, and the pump holder must be larger than at least the outer circumference of the pump shaft, making structure large and heavy.

Further, the oil pump cannot be reliably positioned with respect to the rotation direction of the chain, and hence the oil pump is twisted in the same direction as the rotation direction of the driven sprocket, causing vibration and noise.

### SUMMARY OF THE INVENTION

It is therefore an object of the present invention to provide an oil pump supporting structure that prevents vibration and noise of an oil pump.

To attain the above object, there is provided an oil pump supporting structure of an automatic transmission, including a chain that connects a drive sprocket attached to a rotary member and a driven sprocket attached to a rotary shaft of an oil pump so that an oil pump is driven by rotation of the drive sprocket, a partition member that supports the rotary member inside a path of the chain, and a pump holding member that connects the partition member and the oil pump to each other on a side on which the driven sprocket of the oil pump is mounted, wherein a line that connects a point of connection between the pump holding member and the oil pump and a point of connection between the pump holding member and the partition member is substantially parallel with a direction of tension of the chain acting when the oil pump is driven.

According to the present invention, since the partition member and the oil pump are fixed to each other by the pump holding member, vibration of the oil pump in the direction of tension of the chain acting when the oil pump is driven can be suppressed to reduce vibration noise.

Other features and advantages of the present invention will apparent from the following detailed description taken in conjunction with the accompanying drawings, in which like reference characters designate the same or similar parts throughout the figures thereof.

### BRIEF DESCRIPTION OF THE DRAWINGS

FIG. 1 is a sectional view showing an oil pump of a continuously variable transmission and its vicinity according to an embodiment of the present invention;
FIG. 2 is a front view showing the oil pump and its vicinity;
FIG. 3 is a side view showing the way the oil pump is supported; and
FIG. 4 is a graph showing the relationship between vibration and noise of the oil pump.

### DETAILED DESCRIPTION OF THE PREFERRED EMBODIMENT

The present invention will now be described in detail with reference to the drawings showing a preferred embodiment thereof.

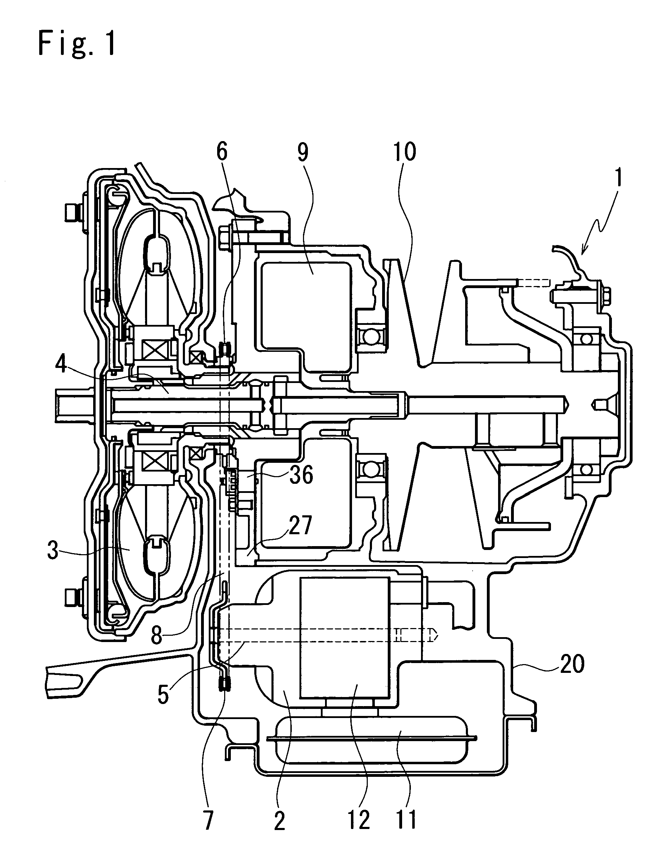

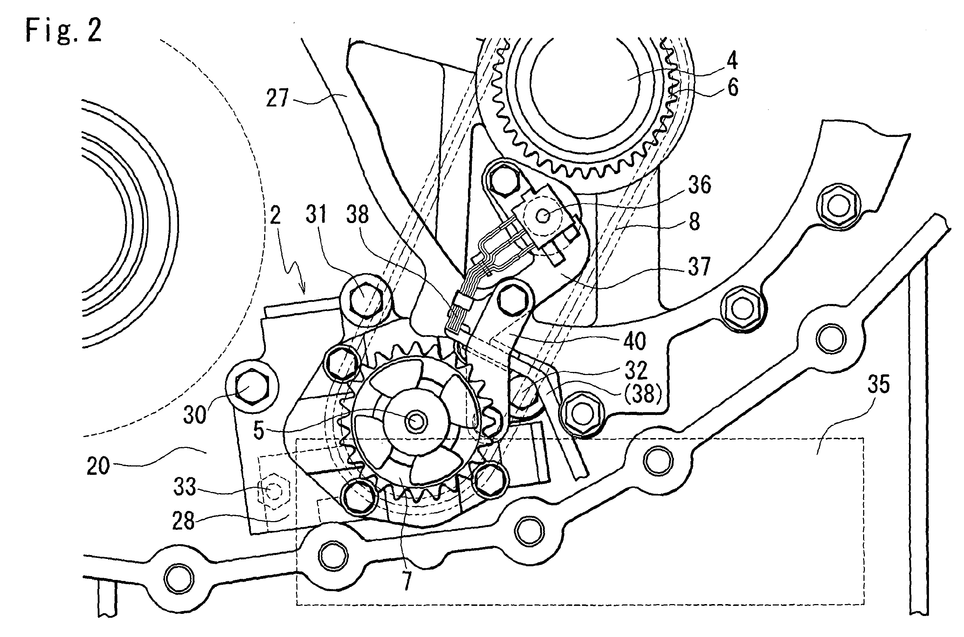

FIG. 1 is a sectional view showing an oil pump of a belt type continuously variable transmission and its vicinity according to an embodiment of the present invention. FIG. 2 is a front view showing the oil pump and its vicinity according to the embodiment.

A continuously variable transmission 1 to which power from an engine is input includes an input shaft 4 to which power is input from the engine via a torque converter 3, a forward/backward switching mechanism 9 that changes rotation directions of the power input to the input shaft 4, and a shift mechanism 10 that converts and transmits revolutions to wheels of a vehicle, not shown.

A vane type oil pump 2 driven by torque from the input shaft 4 is disposed such that an oil pump rotary shaft 5 and the input shaft 4 are in parallel with each other.

It is preferred that the vane type oil pump 2, which is small and efficient and has high discharge pressure, is applied to the belt type continuously variable transmission that requires high hydraulic pressure.

A drive sprocket 6 is provided between the torque converter 3 and the forward/backward switching mechanism 9 and directly connected to a pump impeller of the torque converter 3 as a rotary member. A chain 8 is looped over the drive sprocket 6 and a driven sprocket 7, which is provided on the oil pump rotary shaft 5 of the oil pump 2, to drive the oil pump 2.

Since the oil pump 2 is not disposed coaxially with the input shaft 4, the input shaft 4 of the continuously variable transmission 1 can be reduced in axial length.

An end of the oil pump 2 on a side opposite to the side on which the driven sprocket 7 is provided is connected to a transmission case 20 of the continuously variable transmission 1, so that the oil pump 2 is fixed.

An oil strainer 11 is connected to a lower side of the oil pump 2 as viewed in FIG. 1. The oil pump 2 absorbs oil stored in the lower part of the continuously variable transmission 1 through the oil strainer 11. The oil is pressurized by a pressurizing mechanism 12 in the oil pump 2 and supplied to an oil channel provided on the transmission case 20 side.

The oil pump 2 is fastened on the transmission case 20-by bolts 30, 31, and 32 that penetrate the oil pump 2 from the side on which the driven sprocket 7 is provided up to the transmission case 20 as shown in FIG. 2. A valve unit 35 is disposed in the lower part of the oil pump 2 at the back as viewed in FIG. 2, and hence the bolts cannot be inserted into the oil pump 2 from the front side as viewed in FIG. 2. Therefore, the bolts 30, 31, and 32 are concentrated in the upper part of the oil pump 2. Further, since an oil channel 28 connected to the oil strainer 11 is formed in the lower part of the oil pump 2, and hence through-holes for fixing the oil pump 2 cannot be formed in the lower part of the oil pump 2.

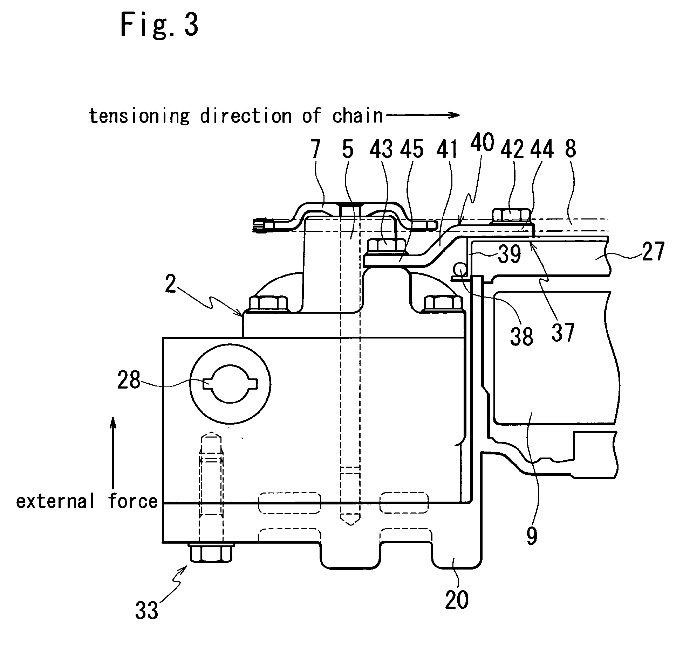

Therefore, in the body of the oil pump 2, threads are formed on a side that receives external force in such a direction as to pull the oil pump 2 away from the transmission case 20 due to tension of the chain 8 (the lower left-hand part of FIG. 3) and at a location set in the lower part of the oil pump 2 and as far as possible from an oil pump rotary shaft 5. The oil pump 2 is fixed to the transmission case 20 by inserting the bolt 33 from the reverse side of a wall of the transmission case 20 on which the oil pump 2 abuts.

A partition member 27, which is attached to the transmission case 20 to support the input shaft 4, is disposed between the torque converter 3 and the forward/backward switching mechanism 9.

Inside the path of the chain 8, a sensor 36 that detects rotation of a drum within the forward/backward switching mechanism 9 is mounted on the partition member 27.

Harnesses 38 are extended from the sensor 36 and connected to a transmission controller, not shown, provided in the vicinity of the valve unit 35.

It should be noted that the harnesses 38 are bound up halfway into a bundle having a circular cross-section surface.

On a side of the oil pump 2 opposite to the side connected to the transmission case 20, the partition member 27 and the oil pump 2 are connected to each other by a pump holding member 40.

The pump holding member 40 is disposed in substantially parallel with the tensioning direction of the chain 8 as viewed from the axial direction of the oil pump rotary shaft 5, i.e. in FIG. 2.

FIG. 3 is a side view showing the way the oil pump 2 is supported.

An end 44 of the pump holding member 40, which is fixed to the partition member 27, and an end 45 of the pump holding member 40, which is fixed to the oil pump 2, are offset from each other via a slope 41.

Inside the path of the chain 8, the end 44 of the pump holding member 40 is fixed to the partition member 27 by a bolt 42 so that the end 44 can be prevented from interfering with the chain 8.

Here, a face of the transmission case 20, to which the oil pump 2 is connected, and a face of the partition member 27, to which the pump holding member 40 is connected, are offset for an axial direction of the oil pump rotary shaft 5.

The amount of the offset is slightly lower than an axial height of the oil pump 2.

Therefore, the driven sprocket 7 of the oil pump 2 is disposed closer to the torque converter 3 than the partition member 27.

The chain 8, which is looped over the drive sprocket 6 and the driven sprocket 7, is disposed closer to the pump holding member 40.

And the chain 8 is disposed such that a path plane which is defined by the path of the chain 8 and the face of the partition member 27 which is connected to the pump holding member 40 are in parallel with each other.

Consequently, the pump holding member 40 and the bolt 42 are disposed in the path plane of the chain 8.

The end 45 of the pump holding member 40 is offset downward from the end 44 as viewed in FIG. 3.

Thus, the end 45 is located below the driven sprocket 7 while preventing from interfering with the chain 8 and the driven sprocket 7, and is fixed to the oil pump 2 by a bolt 43.

When the partition member 27 and the end 44 of the pump holding member 40 are fixed to each other, the sensor 36 and a bracket 37 that supports the harnesses 38 extended from the sensor 36 are interposed between the end 44 and the partition member 27, and the bracket 37 as well as the pump holding member 40 is fastened with the bolt 42.

At the outer peripheral edge of the partition member 27, the bracket 37 is bent in a direction away from the chain 8 to form a harness holding part 39.

The harnesses 38, which connect the sensor 36 and the transmission controller to each other, cross the chain 8, and the harness holding part 39 holds the harnesses 38 on the reverse side of the pump holding member 40 (the side on which the pump holding member 40 abuts on the oil pump 2 and the partition member 37) so as to keep the harnesses 38 from interfering with the chain 8 and the driven sprocket 7.

The location at which the end 45 of the pump holding member 40 is fixed to the oil pump 2 by the bolt 43 is set to be as far as possible from the oil pump rotary shaft 5 insofar as the bolt 43 can be inserted onto the oil pump 2.

It should be noted that the bolt 33 does not penetrate through the oil pump 2.

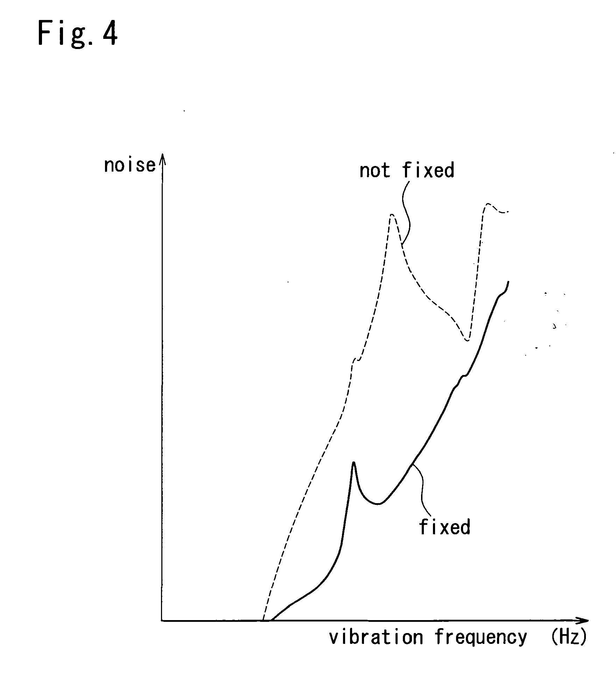

FIG. 4 shows the relationship in vibration frequency and noise when the oil pump 2 is driven between the case where the oil pump 2 is fixed by the pump holding member 40 and the bolt 33 and the case where the oil pump 2 is not fixed by the pump holding member 40 and the bolt 33.

As indicated by the solid line in FIG. 4, in the case where the oil pump 2 is fixed by the pump holding member 40, noise can be reduced as compared with the case where the oil pump 2 is not fixed as indicated by the broken line.

In the present embodiment arranged as described above, the pump holding member 40 is disposed in substantially parallel with the tensioning direction of the chain 8, for connecting the partition member 27 and the oil pump 2 to each other.

Therefore, vibration occurring in the tensioning direction of the chain 8 when the oil pump 2 is driven can be suppressed to reduce vibration noise.

Further, since the location at which the end 45 of the pump holding member 40 is fixed to the oil pump 2 is set to be apart from the oil pump rotary shaft 5, vibration of the oil pump 2 rotating about the oil pump rotary shaft 5 when the oil pump 2 is driven can be suppressed to reduce vibration noise, because the effect of fixing the oil pump 2 can be increased in proportion to the distance from the oil pump 5 (moment = force ×distance from shaft).

Further, since the harness holding part 39 holds the harnesses 38 on the reverse side of the pump holding member 40, the harnesses 38 extended from the sensor 36 can be prevented from interfering with the chain 8 and the driven sprocket 7, so that the harnesses 38 can be protected and prevented from being broken.

Further, since the oil pump 2 is fixed by the bolt 33 on the side that receives external force in such a direction as to pull the oil pump 2 away from the transmission case 20 due to tension of the chain 8 acting when the oil pump 2 is driven, vibration occurring in the tensioning direction of the chain 8 when the oil pump 2 is driven and vibration occurring in the direction in which the oil pump 2 rotates about the oil pump rotary shaft 5 can be suppressed.

Further, since the threads are formed on the oil pump 2, and the bolt 33 is inserted onto the oil pump 2 from the reverse side of the wall of the transmission case 20 abutting on the oil pump 2 so as to fix the oil pump 2 and the transmission case 20 to each other, the bolt 33 can be prevented from interfering with the oil channel 28 formed in the oil pump 2, making it easier to design the oil channel 28.

Further, the side of the oil pump 2 which receives external force in such a direction as to pull the oil pump 2 away from the transmission case 20 due to tension of the chain 8 is apart from the partition member 27, and hence if the side of the oil pump 2 which receives external force in such a direction as to pull the oil pump 2 away from the transmission case 20 is fixed by the pump holding member 4 fastened on the partition member 27, the pump holding member 40 must be long. Therefore, it is preferred that the oil pump 2 is fastened with the bolt 33 on the side that receives external force in such a direction as to pull the oil pump 2 away from the transmission case 20.

Further, it is particularly effective that the present invention is applied to a vane type oil pump that pulsates when discharging hydraulic pressure because of its high discharge pressure and high airtightness.

## Claims

1. An oil pump supporting structure of an automatic transmission, comprising:
a chain (8), that connects a drive sprocket (6) attached to a rotary member and a driven sprocket (7) attached to a rotary shaft (5) of an oil pump (2) so that an oil pump is driven by rotation of the drive sprocket;
a partition member (27) that supports the rotary member inside a path of said chain; and
a pump holding member (40) that connects said partition member and the oil pump to each other on a side on which the driven sprocket of the oil pump is mounted,
wherein a line that connects a point of connection between said pump holding member and the oil pump and a point of connection between said pump holding member and said partition member is substantially parallel with a direction of tension of said chain acting when the oil pump is driven.

2. An oil pump supporting structure of an automatic transmission according to claim 1, wherein the point of connection between said pump holding member and the oil pump is away from the rotary shaft of the oil pump.

3. An oil pump supporting structure of an automatic transmission according to claim 1 or claim 2, wherein on a side that abuts on the oil pump and said partition member, said pump holding member holds harnesses extended from a sensor (36) provided on the partition member inside the path of said chain, so that the harnesses (38) can be drawn out of the path of said chain.

4. An oil pump supporting structure of an automatic transmission according to any of claims 1 to 3, wherein:
an end face of the oil pump on a side opposite to a side on which said driven sprocket is provided is attached to a transmission case (20); and
a side of the oil pump to which external force in such a direction as to pull the oil pump from the transmission case is applied due to tension of said chain acting when the oil pump is driven is fixed to the transmission case by inserting a bolt (33) from the transmission case into threads formed at a location away from the rotary shaft of the oil pump.

5. An oil pump supporting structure of an automatic transmission according to any of claims 1 to 4, wherein the oil pump comprises a vane type oil pump.

6. An oil pump support structure for an engine transmission having a rotary member supported by a shaft support (27), the structure comprising a drive member (8) arranged to be coupled to the rotary member and to an oil pump shaft (5) to enable the rotary member to drive the oil pump shaft (5), and a holding member (40) arranged for fixing to the oil pump (2) and the shaft support (27), wherein the drive member (8) and the holding member (40) are arranged to be fitted to the same side of the oil pump, with the line joining the points of connection of the holding member (40) with the oil pump (2) and the shaft support (27) being substantially parallel to the direction of tension in the drive member (8) when viewed in a direction parallel to the axis of rotation of the oil pump shaft (5).
